# EUROPÄISCHE PATENTSCHRIFT

(11) **EP 0 915 116 B1**
(45) Veröffentlichungstag und Bekanntmachung des Hinweises auf die Patenterteilung: **02.01.2002**
(21) Anmeldenummer: 98119932.6
(22) Anmeldetag: 21.10.1998
(51) Int. Cl.: C08G 18/70, C09D 175/04

(54) **Verfahren zur Herstellung von Mehrschichtlackierungen**
Process for the preparation of multilayer coatings
Procédé pour la préparation de revêtements multicouches

(30) Priorität: 05.11.1997 DE 19748792
(43) Veröffentlichungstag der Anmeldung: 12.05.1999
(73) Patentinhaber: E.I. DU PONT DE NEMOURS AND COMPANY, Wilmington Delaware 19898 (US)
(72) Erfinder: Herrmann, Friedrich, 42117 Wuppertal (DE); Kälke, Herbert, 45472 Mülheim-Ruhr (DE)
(74) Vertreter: Gille Hrabal Struck Neidlein Prop Roos

(56) Entgegenhaltungen:
- EP-A- 0 172 337
- US-A- 5 496 642

## Beschreibung

Die Erfindung betrifft ein Verfahren zur Herstellung einer Mehrschichtlackierung aus einem wäßrigen Basislack und einem Zweikomponenten-Polyurethanklarlack, nachstehend abgekürzt als "2K-PU-Klarlack".

Bei der Herstellung von Mehrschichtlackierungen des Basislack/Klarlack-Typs durch Naß-in-Naß-Applikation eines wäßrigen Basislacks und eines 2K-PU-Klarlacks handelt es sich um ein im Bereich der Automobil- und Automobilteilelackierung weit verbreitetes Lackierverfahren. 2K-PU-Klarlacke werden erst kurz vor ihrer Applikation durch Vermischen einer hydroxyfunktionelle Bindemittel enthaltenden Stammlackkomponente mit einer Polyisocyanathärterkomponente hergestellt. Während das Vermischen im handwerklichen Bereich mit üblichen Rührern erfolgt, stehen in industriellen Lackieranlagen, beispielsweise in Anlagen für die Automobilerstlackierung Mischaggregate für Zweikomponentenlacke, wie z.B. statische Mischer (beispielsweise Kenics-Mischer) zur Verfügung.

Klarlacke zeigen oftmals Benetzungsprobleme sowie eine Krateranfälligkeit bei der Überlackierung von Wasserbasislackschichten. Insbesondere die Kraterbildung offenbart sich dabei oftmals erst nach dem Einbrennen der Klarlackschicht, was zu einer unerwünschten Rückläuferquote führt, d.h. eine Nacharbeit oder Reparaturlackierung erfordert, die den Ablauf des Serienlackierprozesses stört und verteuert.

Aufgabe der Erfindung ist es, die vorstehenden Nachteile zu vermeiden und eine größere Prozeßsicherheit bei der Herstellung von Mehrschichtlackierungen aus nach dem Naß-in-Naß-Verfahren appliziertem Wasserbasislack und 2K-PU-Klarlack zu erreichen. Insbesondere soll eine Absenkung der Rückläuferquote bei den an sich fertig lackierten, d.h. mit eingebrannter Basislack/Klarlack-Zweischichtlackierung versehenen Substraten, insbesondere Automobilkarossen und deren Teilen erreicht werden.

Es wurde gefunden, daß die Aufgabe gelöst werden kann, wenn die bei der Herstellung des 2K-PU-Klarlacks durch Vermischen mit der Stammlackkomponente verwendete Polyisocyanathärterkomponente mindestens 25 Gew.-% der Gesamtmenge der im fertig gemischten 2K-PU-Klarlack enthaltenen Additive mit Oberflächenspannung absenkender Wirkung enthält. Es wurde im Rahmen der Erfindung gefunden, daß es sehr wesentlich ist, zumindest einen Teil der im fertig gemischten 2K-PU-Klarlack enthaltenen Additive mit Oberflächenspannung absenkender Wirkung als Bestandteile der Polyisocyanathärterkomponente und diese nicht vollständig als Bestandteile des Stammlacks in den 2K-PU-Klarlack einzuarbeiten. Es ergibt sich ein überraschender positiver Effekt im Sinne der vorstehenden Aufgabenstellung, wenn die im fertig gemischten 2K-PU-Klarlack enthaltenen Additive mit Oberflächenspannung absenkender Wirkung mindestens zu 25 Gew.-%, bezogen auf deren Gesamtgehalt, über die Polyisocyanathärterkomponente, d.h. als deren Bestandteile in den 2K-PU-Klarlack gelangen.

Gegenstand der Erfindung ist daher ein Verfahren zur Herstellung einer Mehrschichtlackierung durch Applikation einer farb- und/oder effektgebenden Basislackschicht aus einem wäßrigen Basislack, Naß-in-Naß-Applikation einer Klarlackschicht aus einem kurz vor seiner Applikation durch Vermischen einer hydroxyfunktionelle Bindemittel und Lösemittel enthaltenden Stammlackkomponente mit einer Polyisocyanatkomponente hergestellten Zweikomponenten-Polyurethanklarlack auf die Wasserbasislackschicht und gemeinsames Einbrennen der Wasserbasislack- und Klarlackschicht, das dadurch gekennzeichnet ist, daß der verwendete Zweikomponenten-Polyurethanklarlack 0,01 bis 1 Gew.-% eines oder mehrerer Additive mit Oberflächenspannung absenkender Wirkung, bezogen auf den Klarlackfestkörper, enthält, wobei mindestens 25 Gew.-% der im Zweikomponenten-Polyurethanklarlack enthaltenen Gesamtmenge der Additive mit Oberflächenspannung absenkender Wirkung vor dem Vermischen in der Polyisocyanathärterkomponente enthalten sind.

Der Klarlackfestkörpergehalt wird durch die nicht-flüchtigen Anteile gebildet.

Bei den im erfindungsgemäßen Verfahren verwendeten Wasserbasislacken handelt es sich um die üblichen, dem Fachmann geläufigen farb- und/oder effektgebenden wäßrigen Basislacküberzugsmittel, wie sie zur Herstellung von Basislack/Klarlack-Zweischichtlackierungen eingesetzt werden und in großer Zahl beispielsweise aus der Patentliteratur bekannt sind. Sie unterliegen keiner Beschränkung. Die Wasserbasislacke enthalten Bindemittelsysteme, die z.B. anionisch, kationisch oder nicht-ionisch stabilisiert sind. Die Wasserbasislacke können physikalisch trocknend oder unter Ausbildung kovalenter Bindungen vernetzbar sein. Bei den unter Ausbildung kovalenter Bindungen vernetzenden Wasserbasislacken kann es sich um selbst- oder fremdvernetzende Systeme handeln. Falls die Bindemittel nicht selbstvernetzend oder physikalisch trocknend sind, können die Wasserbasislacke auch Vernetzer enthalten. Sowohl die Bindemittelkomponente als auch die Vernetzerkomponente unterliegen keinerlei Beschränkung. Als filmbildende Bindemittel können beispielsweise die üblichen filmbildenden Polyester-, Polyurethan- und/oder (Meth)acrylcopolymerharze verwendet werden. Es können auch Mischungen verschiedener Bindemittel verwendet werden. Bevorzugt sind Polyurethanharze enthalten, besonders bevorzugt mindestens zu einem Anteil von 15 Gew.-%, bezogen auf den Festharzgehalt des Wasserbasislacks. Die Auswahl der gegebenenfalls enthaltenen Vernetzer ist unkritisch, sie richtet sich nach der Funktionalität der Bindemittel, d.h. die Vernetzer werden so ausgewählt, daß sie eine zur Funktionalität der Bindemittel komplementäre, reaktive Funktionalität aufweisen. Beispiele für solche komplementäre Funktionalitäten zwischen Bindemittel und Vernetzer sind: Hydroxyl/Methylolether, Hydroxyl/freies Isocyanat, Hydroxyl/blockiertes Isocyanat, Carboxyl/Epoxid. Sofern miteinander verträglich, können auch mehrere solcher komplementärer Funktionalitäten in einem Wasserbasislack nebeneinander vorliegen. Die gegebenenfalls in den Wasserbasislacken enthaltenen Vernetzer können einzeln oder im Gemisch vorliegen.

Die im erfindungsgemäßen Verfahren verwendeten Wasserbasislacke enthalten neben den üblichen physikalisch trocknenden und/oder chemisch vernetzenden Bindemitteln anorganische und/oder organische Buntpigmente und/oder Effektpigmente, wie z.B. Titandioxid, Eisenoxidpigmente, Ruß, Azopigmente, Phthalocyaninpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferphthalocyaninpigmente.

Weiterhin können die Wasserbasislacke lackübliche Hilfsstoffe enthalten, wie z.B. Füllstoffe, Katalysatoren, Verlaufsmittel, Antikratermittel oder insbesondere Lichtschutzmittel gegebenenfalls in Verbindung mit Antioxidantien.

Bei den im erfindungsgemäßen Verfahren eingesetzten 2K-PU-Klarlacken handelt es sich um die üblichen bekannten 2K-PU-Klarlacküberzugsmittel, wie sie bei der Herstellung von Basislack/Klarlack-Zweischichtlackierungen eingesetzt werden können und beispielsweise aus einer Vielzahl von Patentdokumenten bekannt sind. Sie unterliegen keiner Beschränkung.

Die im erfindungsgemäßen Verfahren verwendeten 2K-PU-Klarlacke können neben einem oder mehreren hydroxyfunktionellen Bindemitteln, organischen Lösemitteln und einem oder mehreren Polyisocyanathärtern sowie einem oder mehreren die Oberflächenspannung absenkenden Additiven beispielsweise einen oder mehrere hydroxyfunktionelle Reaktivverdünner, sowie weitere für Klarlacke übliche Additive enthalten. Die im erfindungsgemäßen Verfahren verwendeten 2K-PU-Klarlacke werden durch Vermischen einer hydroxyfunktionelle Bindemittel und organische Lösemittel enthaltenden Stammlackkomponente mit einer Polyisocyanathärterkomponente, die mindestens 25 Gew.-% der im fertig gemischten 2K-PU-Klarlack enthaltenen Additive mit Oberflächenspannung absenkender Wirkung enthält, hergestellt.

Als filmbildende hydroxyfunktionelle Bindemittel kann die Stammlackkomponente beispielsweise Polyester-, Polyurethan- und/oder (Meth)acrylcopolymerharze einzeln oder im Gemisch enthalten.

Beispiele für in der Stammlackkomponente als Bindemittel enthaltene hydroxyfunktionelle Polyesterharze sind die üblichen, beispielsweise solche mit einem Zahlenmittel der Molmasse (Mn) von 500 bis 5000, bevorzugt von 1000 bis 3000 und Hydroxylzahlen von 30 bis 450, bevorzugt von 50 bis 280 mg KOH/g.

Beispiele für in der Stammlackkomponente als Bindemittel enthaltene hydroxyfunktionelle Polyurethanharze sind die üblichen, beispielsweise solche mit einem Zahlenmittel der Molmasse (Mn) von 500 bis 5000, bevorzugt von 1000 bis 3000 und Hydroxylzahlen von 30 bis 450, bevorzugt von 50 bis 280 mg KOH/g.

Beispiele für in der Stammlackkomponente als Bindemittel enthaltene hydroxyfunktionelle (Meth)acryl-Copolymere sind die üblichen, beispielsweise solche mit einem Zahlenmittel der Molmasse (Mn) zwischen 1000 und 10000 und Hydroxylzahlen von 30 bis 300, bevorzugt von 50 bis 250 mg KOH/g. Die (Meth)acryl-Copolymeren können in Gegenwart von oligomeren oder polymeren Polyester- und/oder Polyurethanharzen, beispielsweise solchen wie in den beiden vorstehenden Absätzen erläutert, hergestellt worden sein.

Die Stammlackkomponente enthält ein oder mehrere flüchtige organische Lösemittel, wie beispielsweise Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Buryldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe.

Die Stammlackkomponente kann einen oder mehrere hydroxyfunktionelle Reaktivverdünner enthalten. Beispiele sind niedrigmolekulare Verbindungen mit mindestens zwei Hydroxylgruppen pro Molekül und Hydroxylzahlen im Bereich von 250 bis 700 mg KOH/g, beispielsweise solche mit einer Molmasse von 62 bis 400; weiterhin sind geeignet oligomere oder polymere Polyole, wie Polyetherpolyole, Oligoesterpolyole, Polycarbonatpolyole und Oligourethanpolyole. Geeignet sind beispielsweise Handelsprodukte, wie durch Reaktion von Polyolen mit Caprolacton erhältliche Polycaprolactonpolyole, durch Reaktion von Oxiranverbindungen mit Polyolen und/oder Wasser erhältliche Polyetherpolyole wie z.B. Triethylenglykol, oder durch Reaktion von Polyaminen mit cyclischen Carbonaten erhältliche Oligourethanpolyole.

Die Stammlackkomponente kann, soweit nicht die gesamte Menge der im fertig gemischten 2K-PU-Klarlack in einer Menge von 0,01 bis 1 Gew.-%, bezogen auf Klarlackfestkörper, enthaltenen Additive mit Oberflächenspannung absenkender Wirkung Bestandteil der Polyisocyanathärterkomponente ist, den entsprechenden fehlenden Mengenanteil von bis zu 75 Gew.-% dieser Additive enthalten.

Die Stammlackkomponente kann auch weitere für Klarlacke übliche Additive in lacküblichen Mengen enthalten, z.B. transparente, farblose Pigmente oder Füllstoffe, Lichtschutzmittel, Antioxidantien, Rheologiesteuerer, wie Di- oder Polyharnstoffverbindungen, Mikrogele, NAD (= non-aqueous-dispersions), spätestens beim Einbrennen der aus den 2K-PU-Klarlacken erstellten Klarlackschichten Formaldehyd liefernde Substanzen. Die Stammlackkomponente kann für den Fall, daß eine Einfärbung gewünscht ist, auch Farbstoffe, transparent ausgeriebene Absorptionspigmente und/oder nichtdeckende Mengenanteile von Absorptionspigmenten enthalten. Die Polyisocyanathärterkomponente enthält ein oder mehrere freie Polyisocyanate als Härter für die hydroxyfunktionellen Bindemittel.

Beispiele für in der Polyisocyanathärterkomponente enthaltene Polyisocyanate sind cycloaliphatische oder aliphatische Diisocyanate wie Tetramethylendiisocyanat, 1,6-Hexamethylendiisocyanat, 1,12-Dodecandiisocyanat, Cyclohexan-1,3- und 1,4-diisocyanat, Isophorondiisocyanat, Biscyclohexylmethandiisocyanat oder deren Gemische.

Außer diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Uretdiongruppen, Urethangruppen, acylierte Harnstoffgruppen und Biuretgruppen aufweisende Polyisocyanate.

Besonders gut geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret, das sich von Isophorondiisocyanat oder Hexandiisocyanat ableitende Isocyanurat oder niedermolekulare Urethangruppen aufweisende Polyisocyanate, wie sie durch Umsetzung von im Überschuß eingesetzten Isophorondiisocyanat mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind.

Es ist erfindungswesentlich, daß die Polyisocyanathärterkomponente neben einem oder mehreren Polyisocyanathärtern mindestens 25, bevorzugt mindestens 50 Gew.-%, und besonders bevorzugt die gesamte Menge der im fertig gemischten 2K-PU-Klarlack enthaltenen Additive mit Oberflächenspannung absenkender Wirkung enthält. Die Gesamtmenge der im fertig gemischten 2K-PU-Klarlack enthaltenen Additive mit Oberflächenspannung absenkender Wirkung beträgt 0,01 bis 1 Gew.-%, bezogen auf Klarlackfestkörper. Bei den in den im erfindungsgemäßen Verfahren eingesetzten 2K-PU-Klarlacken enthaltenen Additiven mit Oberflächenspannung absenkender Wirkung handelt es sich um reinen Wirkstoff oder um Mischungen von reinen Wirkstoffen, oder es handelt sich um den oder die Wirkstoffe enthaltende Zubereitungen, beispielsweise organische Lösungen des oder der Wirkstoffe. Auch im Falle von Zubereitungen beziehen sich die Gew.-%-Angaben auf den Gehalt an reinen Wirkstoffen. Bei den Additiven mit Oberflächenspannung absenkender Wirkung, also den Wirkstoffen handelt es sich um Substanzen, die bei Verwendung in den im erfindungsgemäßen Verfahren eingesetzten 2K-PU-Klarlacken in der vorstehend genannten Menge eine die Oberflächenspannung senkende Wirkung haben und insbesondere bei der Verwendung als Bestandteil der Polyisocyanathärterkomponente zu einer deutlichen Absenkung der Oberflächenspannung der Polyisocyanathärterkomponente führen. Bei den Wirkstoffen handelt es sich insbesondere beispielsweise um lackübliche Verlaufsadditive oder Antikratermittel, die in einer Vielzahl von den Zulieferanten der Lackindustrie angeboten werden. Bevorzugte Beispiele für die Oberflächenspannung absenkende Additive sind fluorhaltige Additive oder insbesondere solche auf Organopolysiloxan- bzw. Silikonbasis oder auf Acrylatbasis.
Die Polyisocyanathärterkomponente enthält im allgemeinen flüchtige organische, gegenüber Isocyanatgruppen inerte (keinen aktiven Wasserstoff enthaltende) Lösemittel. Beispiele für solche Lösemittel sind hydroxylgruppenfreie Glykolether, wie Dipropylenglykoldimethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe.

Die Polyisocyanathärterkomponente kann neben den im fertig gemischten 2K-PU-Klarlack enthaltenen Additiven mit Oberflächenspannung absenkender Wirkung weitere für Klarlacke übliche Additive in lacküblichen Mengen enthalten, vorausgesetzt es handelt sich um gegenüber Isocyanatgruppen inerte Additive. Beispiele für Additive sind transparente, farblose Pigmente oder Füllstoffe, Lichtschutzmittel, Antioxidantien, Rheologiesteuerer, wie Di- oder Polyharnstoffverbindungen, Mikrogele, NAD (= non-aqueous-dispersions), spätestens beim Einbrennen der aus den 2K-PU-Klarlacken erstellten Klarlackschichten Formaldehyd liefernde Substanzen, Trocknungsmittel (zur Entfernung von Wasserspuren). Bevorzugt enthält die Polyisocyanatkomponente neben den im fertig gemischten 2K-PU-Klarlack enthaltenen Additiven mit Oberflächenspannung absenkender Wirkung keine weiteren Additive.

Die im erfindungsgemäßen Verfahren eingesetzten 2K-PU-Klarlacke werden durch Vermischen von Stammlack- und Polyisocyanathärterkomponente in einem dem angestrebten Vernetzungsgrad angepaßten stöchiometrischen Verhältnis von im allgemeinen 50 bis 90 Gewichtsteile Bindemittel und gegebenenfalls Reaktivverdünner zu 50 bis 10 Gewichtsteile Vernetzer hergestellt. Dabei kann das Vermischen von Stammlack- und Polyisocyanathärterkomponente mit üblichen Rührern oder mit in industriellen Lackieranlagen üblichen, beispielsweise in Anlagen für die Automobilerstlackierung vorhandenen Mischaggregaten für Zweikomponentenlacke, z.B. statische Mischer (beispielsweise Kenics-Mischer) erfolgen. Die Verwendung einer höhere Mischintensität gewährleistenden Mischtechnologie, wie beispielsweise dynamische Mischer ist nicht notwendig. Hierin liegt ein weiterer Vorteil des erfindungsgemäßen Verfahrens.

Die im erfindungsgemäßen Verfahren eingesetzten 2K-PU-Klarlacke weisen im applikationsfähigen Zustand bevorzugt einen Festkörpergehalt von 40 bis 80 Gew.-% auf. Dieser kann sich beim Vermischen der Stammlack- und der Polyisocyanathärterkomponente einstellen oder er wird nach Vermischen der beiden Komponenten durch Zugabe von organischem Lösemittel auf den gewünschten Wert eingestellt.

Die 2K-PU-Klarlacke werden im erfindungsgemäßen Verfahren zur Herstellung der äußeren Klarlackschicht einer Basislack/Klarlack-Zweischichtlackierung verwendet.

Die Basislack/Klarlack-Zweischichtlackierung wird hergestellt durch Auftrag und Einbrennen einer Klarlacküberzugsschicht aus dem 2K-PU-Klarlack auf ein mit einer farb- und/oder effektgebenden Wasserbasislackschicht versehenes Substrat. Dabei erfolgt der Auftrag der farb- und/oder effektgebenden Wasserbasislackschicht auf ein gegebenenfalls vorbeschichtetes Substrat, insbesondere auf vorbeschichtete Automobilkarossen oder deren Teile. Beispiele für Vorbeschichtungen auf Automobilkarossen oder deren Teilen sind eine Elektrotauchgrundierungsschicht, eine zweischichtige Vorbeschichtung bestehend aus einer Elektrotauchgrundierungsschicht und einer Spritzfüllerschicht oder eine zweischichtige Vorbeschichtung bestehend aus einer Elektrotauchgrundierungsschicht und einer zweiten durch Elektrotauchlackierung aufgebrachten Überzugsschicht.

Der 2K-PU-Klarlack wird nach dem bekannten Naß-in-Naß-Verfahren auf die den Farbton der Mehrschichtlackierung bestimmende Wasserbasislackschicht aufgetragen. Dabei erfolgt der Auftrag der Basislackschicht durch Spritzen aus einem farb- und/oder effektgebenden wäßrigen Basislack in einer vom Farbton abhängigen Trockenschichtdicke, beispielsweise zwischen 10 bis 40 µm. Im Anschluß an die Applikation der Wasserbasislackschicht erfolgt beispielsweise nach einer kurzen Ablüftphase, z.B. bei 20 bis 80°C, der Auftrag der Klarlackschicht aus dem 2K-PU-Klarlack durch Spritzen in einer Trockenschichtdicke von im allgemeinen zwischen 25 und 50 µm. Gegebenfalls kann kurz abgelüftet werden. Oftmals ist es zweckmäßig und bevorzugt, das Ablüften durch Erwärmen, beispielsweise bevorzugt unter Zuhilfenahme von Infrarotbestrahlung zu unterstützen. Danach wird das Substrat dem Einbrennprozeß zugeführt, bei dem die Klarlacküberzugsschicht gemeinsam mit der Basislackschicht bei erhöhten Temperaturen beispielsweise von 80 bis 160°C eingebrannt wird.

Das erfindungsgemäße Verfahren führt zu einer erhöhten Prozeßsicherheit bei der Herstellung von Mehrschichtlackierungen durch Naß-in-Naß-Applikation von Wasserbasislack und 2K-PU-Klarlack. Die eingangs erläuterte Rückläuferquote ist im allgemeinen von einer Reihe von Parametern abhängig, wie insbesondere Wahl der eigentlichen Lackierverfahrensparameter, Art und Farbton des Wasserbasislacks sowie Art des 2K-PU-Klarlacks; insgesamt wird die Rückläuferquote durch die erfindungsgemäße Verfahrensweise gesenkt, wie sich beim Vergleich mit einem jeweils analog durchgeführten Lackierverfahren, bei dem die im 2K-PU-Klarlack enthaltenen Additive mit Oberflächenspannung absenkender Wirkung ausschließlich Bestandteil der Stammlackkomponente sind, gezeigt hat. Bei von der Anmelderin durchgeführten statistischen Versuchsreíhen konnten Absenkungen der Rückläuferquote von bis zu 60 % erzielt werden, beispielsweise konnte die Rückläuferquote von 25 % auf 10 % gesenkt werden. Der im erfindungsgemäßen Verfahren eingesetzte 2K-PU-Klarlack kann mit üblichen Rührern oder mit in industriellen Lackieranlagen üblichen Mischaggregaten für Zweikomponentenlacke, z.B. statische Mischer (beispielsweise Kenics-Mischer) aus Stammlack- und Polyisocyanathärterkomponente hergestellt werden. Die Verwendung einer höhere Mischintensität gewährleistenden Mischtechnologie, wie beispielsweise dynamische Mischer ist zur Erzielung des erfindungsgemäßen Effektes der Erhöhung der Prozeßsicherheit nicht notwendig.

## Patentansprüche

1. Verfahren zur Herstellung einer Mehrschichtlackierung durch Applikation einer farb- und/oder effektgebenden Basislackschicht aus einem wäßrigen Basislack, Naß-in-Naß-Applikation einer Klarlackschicht aus einem kurz vor seiner Applikation durch Vermischen einer hydroxyfunktionelle Bindemittel und Lösemittel enthaltenden Stammlackkomponente mit einer Polyisocyanatkomponente hergestellten Zweikomponenten-Polyurethanklarlack auf die Wasserbasislackschicht und gemeinsames Einbrennen der Wasserbasislack- und Klarlackschicht, **dadurch gekennzeichnet, daß** der verwendete Zweikomponenten-Polyurethanklarlack 0,01 bis 1 Gew.-% eines oder mehrerer Additive mit Oberflächenspannung absenkender Wirkung, bezogen auf den Klarlackfestkörper, enthält, wobei mindestens 25 Gew.-% der Additive mit Oberflächenspannung absenkender Wirkung vor dem Vermischen in der Polyisocyanathärterkomponente enthalten sind.

2. Verfahren nach Anspruch 1, **dadurch gekennzeichnet, daß** man einen Zweikomponenten-Polyurethanklarlack verwendet, dessen Polyisocyanathärterkomponente vor dem Vermischen mindestens 50 Gew.-% der Additive mit Oberflächenspannung absenkender Wirkung enthält.

## Claims

1. Process for the production of a multilayer lacquer coating by application of a coloured and/or special effect base lacquer layer of an aqueous base lacquer, wet-on-wet application of a clear lacquer layer of a two-component polyurethane clear lacquer produced shortly before application thereof by mixing a hydroxy-functional binder and solvent-containing stock lacquer component with a polyisocyanate component onto the water-borne base lacquer layer and joint stoving of the water-borne base lacquer layer and clear lacquer layer, **characterised in that** the two-component polyurethane clear lacquer used contains 0.01 to 1 wt.% of one or more additives having a surface tension-reducing action, relative to the solids content of the clear lacquer, wherein at least 25 wt.% of the additives having a surface tension-reducing action are present in the polyisocyanate curing agent component prior to mixing.

2. Process according to claim 1, **characterised in that** a two-component polyurethane clear lacquer is used, the polyisocyanate curing agent component of which contains at least 50 wt.% of the additives having a surface tension-reducing action prior to mixing.

## Revendications

1. Procédé de fabrication d'une peinture multicouche par application d'une couche de peinture de base constituée d'une peinture de base aqueuse donnant une coloration et/ou un effet, par application humide-sur-humide, sur la couche de peinture de base aqueuse, d'une couche de peinture transparente constituée d'une peinture transparente au polyuréthane à deux composants fabriquée peu avant son application par mélange d'un composant formant la peinture initiale, contenant un liant à fonction hydroxy et un solvant avec un composant au polyisocyanate et par cuisson commune de la couche de peinture de base aqueuse et de la couche de peinture transparente, **caractérisé par le fait que** la peinture transparente au polyuréthane à deux composants employée contient 0,01 à 1 % en poids d'un ou de plusieurs additifs exerçant une action abaissant la tension superficielle, rapporté aux éléments solides de la peinture transparente, étant précisé qu'au moins 25 % en poids de la quantité totale des additifs exerçant une action abaissant la tension superficielle sont contenus, avant le mélange, dans le composant formant le durcisseur au polyisocyanate.

2. Procédé selon la revendication 1, **caractérisé en ce que** l'on emploie une peinture transparente à base de polyuréthane à deux composante dont le composant formant le durcisseur au polylsocyanate contient, avant le mélange, au moins 50 % en poids des additifs exerçant une action abaissant la tension superficielle.
